# EUROPÄISCHE PATENTANMELDUNG

(11) **EP 0 807 672 A2**
(43) Veröffentlichungstag der Anmeldung: **19.11.1997**
(21) Anmeldenummer: 97107811.8
(22) Anmeldetag: 13.05.1997
(51) Int. Cl.: C09J 5/00, C09J 157/00, B65B 7/28

(54) **Verfahren zum Heisssiegeln von Substraten unter Verwendung von wässrigen Polymerisatdispersionen**

(30) Priorität: 14.05.1996 DE 19619465
(71) Anmelder: BASF AKTIENGESELLSCHAFT, 67056 Ludwigshafen (DE)
(72) Erfinder: Balk, Roelof, Dr., 67459 Böhl-Iggelheim (DE); Wildburg, Gerald, Dr., 67071 Ludwigshafen (DE); Barwich, Jürgen, Dr., 67434 Neustadt (DE)
(74) Vertreter: Kinzebach, Werner, Dr.

(57) **Zusammenfassung**

In einem Verfahren zum Heißsiegeln von Substraten wie von Kartonagen, Metall- oder Kunststoffolien durch Beschichten eines Substrats mit einer wässrigen Dispersion eines Polymerisats olefinisch ungesättigter Monomerer und Verpressen des beschichteten Substrats mit einem zweiten zu verbindenden Substrat unter Erhitzen wird als Heißsiegelklebstoff oder -lack zum Beschichten eine Polymerisatdispersion verwendet, der ein wasserlösliches oder wasserdispergierbares Stärkeabbauprodukt zugesetzt worden ist, und zwar zu Beginn oder während der Dispersionspolymerisation der Monomeren. Das Verfahren eignet sich besonders zur Herstellung von Blisterpackungen.

## Beschreibung

Die Erfindung betrifft ein Verfahren zum Heißsiegeln von Substraten durch Beschichten eines Substrats mit einer speziellen wässrigen Polymerisatdispersion als Heißsiegelklebstoff bzw. -lack und Verpressen des beschichteten Substrats mit einem zweiten zu verbindenden Substrat bei Temperaturen zwischen 80 und 250°C. Sie betrifft ferner die Verwendung der speziellen Polymerisatdispersionen als Heißsiegelklebstoffe bzw. -lacke.

Die Verwendung von Polymerisaten für heißsiegelbare Beschichtungen, auch Heißsiegelklebstoffe oder -lacke genannt, ist bekannt. Mit ihnen werden Verpackungen wie die sogenannten Blisterpackungen hergestellt, die sich besonders gut für ein Zur-Schau-stellen von zu verkaufenden Artikeln eignen. Dazu wird der Heißsiegelklebstoff oder -Lack schichtförmig auf ein flächiges Substrat, z.B. eine Kartonage, aufgetragen und der zu verpackende Gebrauchsartikel durch Heißsiegeln mit einer entsprechend der Form des Artikels vorgeformten Kunststoffolie bzw. einem Kunststofformteil umschlossen. Da die mit dem Heißsiegelklebstoff bzw. -Lack beschichteten Substrate ( z.B. Kartonagen) erst in einem späteren Arbeitsgang weiterverarbeitet werden, müssen sie gestapelt werden können, ohne daß sie bei den üblichen Lagertemperaturen bis zu 40°C verkleben oder zusammenhaften (Blockfestigkeit). Andererseits sollen die Heißsiegelklebstoffe bzw. -lacke eine thermische Aktivierung für eine Verklebung mit hoher Festigkeit ermöglichen (gute Heißsiegelbarkeit). Aufgrund dieser etwas gegensätzlichen Eigenschaftsanforderungen an die Heißsiegelklebstoffe bzw. -lacke ist es verständlich, daß manche bekannte Heißsiegelklebstoffe bzw. -lacke die gewünschten Anforderungen in der Praxis nicht voll erfüllen.

Es ist auch bekannt, wässrige Polymerisatdispersionen als Heißsiegelklebstoffe bzw. -lacke zu verwenden. So beschreibt die DE-A 3 921 256 wässrige Heißsiegelklebstoffe. Für deren Produktion werden zuerst in organischer Lösung Carboxylgruppen oder Carbonsäureanhydridgruppen enthaltende Copolymerisate hergestellt, die dann nach Ammoniak-Zusatz in Wasser dispergiert werden, bevor die Anteile an organischem Lösungsmittel destillativ entfernt werden. Eine solche Produktion ist aufwendig und teuer.

Die in der EP-A 0574 803 beschriebenen wässrigen Heißziegelklebstoff-Dispersionen enthalten zwei unterschiedliche Copolymerisate, deren Glasübergangstemperaturen sich um mindestens 20°C unterscheiden. Die Produktion erfolgt in zwei Stufen, wobei zuerst das wasserlösliche Copolymerisat A mit hoher Glasübergangstemperatur hergestellt wird, in dessen Gegenwart dann die Monomeren des Copolymeren B polymerisiert werden.

Der vorliegenden Erfindung lag die Aufgabe zugrunde, für ein Verfahren zum Heißsiegeln von Substraten wässrige Polymerisatdispersionen für die Verwendung als Heißsiegelklebstoffe und -lacke zu finden, die eine gute Blockfestigkeit und Heißsiegelbarkeit aufweisen und zugleich sehr einfach produzierbar sind.

Es wurde nun gefunden, daß in einem Verfahren zum Heißsiegeln von Substraten durch Beschichten eines Substrats mit einer wässrigen Dispersion eines Polymerisats olefinisch ungesättigter Monomerer, das eine Glasübergangstemperatur von unter +50°C aufweist (Heißsiegelklebstoff bzw. -lack) und Verpressen des beschichteten Substrats mit einem zweiten zu verbindenden Substrat bei Temperaturen zwischen 80 und 250 und insbesondere 180 bis 250°C, die Aufgabe gelöst werden kann, wenn als Heißsiegelklebstoff bzw. -lack eine Polymerisatdispersion der genannten Art verwendet wird, der ein wasserlösliches oder in Wasser dispergierbares Stärkeabbauprodukt als Schutzkolloid zu Beginn oder während der Dispersionspolymerisation der Monomeren zugesetzt wurde, d.h. vor oder bei der Polymerisatherstellung. Ein weiterer Gegenstand der vorliegenden Erfindung ist die Verwendung der speziell hergestellten Polymerisatdispersionen als Heißsiegelklebstoffe bzw. -lacke. Das erfindungsgemässe Verfahren unter Verwendung der speziell hergestellten Polymerisatdispersionen als Heißsiegelklebstoffe bzw. - lacke eignet sich besonders zum Verbinden von Papier oder Kartonagen als Substrat mit vorgeformten, z.B. tiefgezogenen Kunststoffolien bzw. mit Kunstofformteilen zur Herstellung sogenannter Blisterpackungen.

Die erfindungsgemässe Verwendung der speziell modifizierten Polymerisatdispersionen hat verschiedene Vorteile. Im Vergleich zu den Polymerisatdispersionen der oben zitierten DE-A 3 921 256 und EP-A 0574 803 ist die Produktion der erfindungsgemäß verwendeten Polymerisatdispersionen einfacher und kommerziell attraktiver, da die Mitverwendung organischer Lösungsmittel und deren Entfernung entfällt und die Zykluszeit bei der Produktion deutlich kürzer ist - die verwendeten Polymerisatdispersionen können praktisch in einer Eintopfreaktion produziert werden. Die erfindungsgemäß verwendeten Polymerisatdispersionen zeigen ferner eine hohe Scher- und Elektrolytstabilität und sind arm an Stippen. Die hohe Scherstabilität ist bedeutsam bei schnellen Laufgeschwindigkeiten von Beschichtungsapparaturen, wobei große Scherkräfte auftreten können. Die hohe Elektrolytstabilität erlaubt es, bei erforderlichen speziellen Formulierungen der Polymerisatdispersionen Salze und ionische Verbindungen mitzuverwenden, ohne eine Koagulation der Polymerisatdispersion befürchten zu müssen.

Die erfindungsgemäß verwendeten Polymerisatdispersionen zeigen bei ihrer Verwendung als Heißsiegelklebstoffe bzw. -lacke eine sehr gute Blockfestigkeit, die ein Lagern und Stapeln auch der mit größeren Mengen an Polymerisatdipersionen beschichteten Substrate bei höheren Temperaturen gestattet, ohne daß ein Verkleben der beschichteten Substrate miteinander eintritt. Die hohe Blockfestigkeit ist überraschend, da Polymerisatdispersionen gleicher Polymerzusammensetzung, die nach ihrer Herstellung, d.h. nach beendeter Polymerisation erst mit entsprechenden Mengen an Stärkeabbauprodukten abgemischt wurden, keine entsprechende Blockfestigkeit aufweisen. Die erfindungsgemäßen Heißsiegelklebstoffe bzw. -lacke sind gut thermisch aktivierbar und ergeben dann Verklebungen mit guter Festigkeit.

Die erfindungsgemäß als Heißsiegelklebstoffe bzw. -lacke verwendeten Polymerisatdispersionen sind bezüglich einer geeigneten Zusammensetzung ihrer Polymerisate dem Fachmann geläufig. Es sind bevorzugt Polymerisate und Copolymerisate, die Acryl- und/oder Methacrylsäureester einpolymerisiert enthalten, bevorzugt in Mengen von 30 bis 100 und insbesondere von über 50 Gew.%, bezogen auf die Polymermenge. Bedingung ist dabei, daß die Glasübergangstemperatur der Polymerisate bzw. Copolymerisate unter +50°C liegt. Bei noch geeigneteren Polymeren liegt sie unter +25°C, insbesondere unter 0°C und bevorzugt unter -10°C liegt, was sich nach der speziellen Verwendung der Heißsiegelklebstoffe bzw. -lacke richtet. Dabei ist die obere Grenze der Glasübergangstemperatur bei Heißsiegellacken meist etwas höher als bei den Heißsiegelklebstoffen. Da beide aber der Verklebung beim Heißsiegeln dienen, ist der obere Grenzwert der Glasübergangstemperatur von +50°C stets einzuhalten.

Die Glasübergangstemperatur T_{g} der Polymerisate bzw. Copolymerisate läßt sich insbesondere mit der DSC-Methode (Differential Scanning Calorimetry) gemäß ASTM 3418/82 bestimmen und nach anderen Methoden abschätzen. Die gewünschte Glasübergangstemperatur der Polymeren bestimmt mit bzw. begrenzt die Auswahl geeigneter Monomerer und Comonomerer für die Polymerisatherstellung, doch liegt dies im Wissensbereich des Fachmanns.

Als Acryl- und/oder Methacrylsäureester eignen sich vor allem solche von Alkoholen mit 1 bis 20 und insbesondere 1 bis 8 C-Atomen. Bevorzugt sind als Hauptmonomere Ester der Acrylsäure mit 1 bis 8 C-Atomen im Alkoholrest wie n-Butylacrylat und/oder 2-Ethylhexylacrylat, aber auch 2-Butoxyethylacrylat.

Geeignete Comonomere sind z.B. N-Vinylpyrrolidon sowie Vinylester von Carbonsäuren mit 1 bis 20 C-Atomen, wie Vinylacetat, Vinylpropionat oder Vinylstearat. Sehr geeignete Comonomere sind z.B. Vinyl- und Isopropenylaromaten wie Styrol, α-Methylstyrol oder Vinyltoluol, sowie Methylmethacrylat, Acrylnitril oder Methacrylnitril, jedoch liegt bei Mitverwendung von harte Homopolymerisate bildenden Monomeren deren Menge meist unter etwa 50 Gew.% der Gesamtmonomeren, um die gewünschte obere Grenze der Glasübergangstemperatur der resultierenden Copolymerisate nicht zu überschreiten. Als weitere geeignete Comonomere seien Monomere mit funktionellen Gruppen wie Acrylsäure, Methacrylsäure, Maleinsäure oder deren Anhydrid, Glycidyl(meth)acrylate und Hydroxyalkyl(meth)acrylate wie Glycidylmethacrylat oder 2-Hydroxyethylmethacrylat, Acrylamid und Methacrylamid, Acrylamidoglykolsäure, N-Methylol(meth)acrylamid genannt, ferner Monomere mit zwei C=C-Doppelbindungen wie Isopren, Butadien, Ethylenglykoldi(meth)acrylat oder Allylmethacrylat. Vernetzende Monomere werden dabei nur in kleineren Mengen, insbesondere in Mengen von 0,5 bis 10 Gew.% mitverwendet, von ihnen sind solche bevorzugt, die eine Vernetzung des Copolymerisats erst beim Heißsiegeln bewirken.

Die erfindungsgemäß verwendeten Polymerisatdispersionen werden durch Polymerisation der Monomeren in wässriger Dispersion und insbesondere wässriger Emulsion hergestellt, wofür die üblichen radikalischen Initiatoren, Emulgatoren und anderen Hilfsstoffe und Bedingungen für die wässrige Dispersions- und insbesondere Emulsionspolymerisation angewandt werden können. Die Polymerisation in wässriger Dispersion kann diskontinuierlich, mit oder ohne Verwendung von Saatlatices, unter Vorlage aller oder einzelner Bestandteile des Reaktionsgemisches, oder bevorzugt unter teilweiser Vorlage und Nachdosierung der oder einzelner Bestandteile des Reaktionsgemisches, oder nach dem Dosierverfahren ohne Vorlage durchgeführt werden.

Geeignete Polymerisationsinitiatoren sind z.B. Alkali- und Ammoniumpersulfate wie Natriumperoxodisulfat, tert.Butylhydroperoxide, Redoxsysteme mit Wasserstoffperoxid oder wasserlösliche Azoverbindungen. Bevorzugt liegt die Polymerisationstemperatur bei 30 bis 95°C.

Geeignete Emulgatoren, die insbesondere zusätzlich zu den Stärkeabbauprodukten der Dispersion der Monomeren zugefügt werden, sind z.B. Alkalisalze von längerkettigen Fettsäuren, Alkylsulfate, Alkylsulfonate, Alkylarylsulfonate wie Dodecylbenzolsulfonat oder Alkyldiphenyletherdisulfonate wie p-Dodecyldiphenyletherdisulfonat. Geeignete Emulgatoren sind auch die Umsetzungsprodukte von Alkylenoxiden, insbesondere von Ethylenoxid und/oder Propylenoxid, mit längerkettigen Hydroxyl- oder Carboxylverbindungen wie Fettalkohole, Fettsäuren oder Alkylphenole.

Die Emulgatoren werden insbesondere in einer Menge von 0,05 bis 10, bevorzugt von 0,2 bis 5 Gew.%, bezogen auf die Monomerenmenge, angewandt.

Vorteilhaft ist oft der Zusatz eines Molekulargewichtsreglers bei der Polymerisation wie eines Mercaptans, z.B. von Dodecylmercaptan.

Es ist ein Merkmal der erfindungsgemäß verwendeten Polymerisatdispersionen, daß - bei der Herstellung der Polymerisate bzw. Copolymerisate durch Polymerisation in wässriger Dispersion - vor oder bei Beginn oder während der Polymerisation der Monomeren der Dispersion ein in Wasser dispergierbares oder bevorzugt wasserlösliches Stärkeabbauprodukt zugesetzt wird, das als Schutzkolloid wirken kann. Insbesondere sollte bei einem Umsatz von 80 Gew.% der Monomeren mindestens 50 Gew.% der zuzusetzenden Menge an Stärkeabbauprodukt zugesetzt sein. Bevorzugt ist das Stärkeabbauprodukt zu Beginn der Emulsionspolymerisation der Monomeren der Dispersion zuzusetzen.

Die Menge an zugesetztem Stärkeabbauprodukt beträgt im allgemeinen 0,1 bis 50 und bevorzugt 2 bis 20 Gew.%, bezogen auf die Polymerisatmenge.

Stärkeabbauprodukte, die der Dispersion vor oder während der Emulsionspolymerisation der Monomeren zugesetzt werden, sind z.B. hydrothermisch behandelte native Stärken, dünnkochende Stärken, die mit Säuren oder Enzymen teilabgebaut wurden und säuremodifizierte Stärken, die durch Erwärmen einer wässrigen Stärkesuspension unterhalb der Verkleisterungstemperatur in Gegenwart geringer Säuremengen gewonnen wurden. Sehr geeignet sind Dextrine mit der allgemeinen Formel (C₆H₁₀O₅)ₙ .x H₂O, die bei unvollständiger Hydrolyse mit verdünnten Säuren (Säuredextrine) oder durch Hitzeeinwirkung auf feuchte Stärke entstehen (Röstdextrine) wie Weiß- und Gelbdextrine.

Bevorzugte Stärkeabbauprodukte für den Zusatz zu den erfindungsgemäß verwendeten Polymerisatdispersionen sind die sogenannten verzuckerten Stärken, die durch unvollständige Hydrolyse mit verdünnter wässriger Saure erhalten werden. Meist haben sie ein mittleres Molekulargewicht M_{w} von 2500 bis 25000. Sie sind im Handel erhältlich, z.B. als C-PUR Produkte 01906, 01908, 019010, 01915, 01921, 01924, 01932 oder 01934 der Cerestar Deutschland GmbH, Krefeld. Die Herstellung verzuckerter Stärken ist allgemein bekannt und u.a. in G.Tegge, Stärke und Stärkederivate, Behr's Verlag, Hamburg 1984, S.173 und 220 ff. beschrieben. Von besonderem Vorteil ist es, wenn die verzuckerte Stärke in einem Mengenanteil von 10 bis 70 und insbesondere 20 bis 40 Gew.% ein Molekulargewicht von unter 1000 aufweist. Empfehlenswerte verzuckerte Stärken sind auch solche, deren Dextroseequivalent DE 5 bis 40 und insbesondere 10 bis 20 beträgt (DIN 10308 Ausg. 5/71, siehe auch G.Tegge, loc.cit.,S. 305). Die verzuckerten Stärken sind normalerweise bei Raumtemperatur in Wasser löslich, wobei die Löslichkeitsgrenze in der Regel oberhalb von 50 Gew.% liegt, was sich für die Herstellung der wässrigen Polymerisatdispersionen als sehr vorteilhaft erweist.

Obwohl die Stärkeabbauprodukte keiner chemischen Modifizierung bedürfen, können sie aber auch in geeignet modifizierter Form, z.B. durch Veretherung oder Veresterung modifizierter Form verwendet werden.

Nach Beendigung der Herstellung der Polymerisatdispersionen kann die Dispersion chemisch desodoriert werden, wie durch Zusatz von z.B. Alkylhydroperoxiden und des Natriumsalzes der Hydroxyethansulfinsäure (Formaldehydsulfoxylat).

Der Feststoffgehalt der erfindungsgemäß verwendeten Polymerisatdispersionen liegt insbesondere bei 40 bis 80 und bevorzugt bei 45 bis 75 Gew.%.

Für die Verwendung der Polymerisatdispersionen als Heißsiegelklebstoffe bzw. -lacke können der Dispersion übliche Zusatzstoffe wie Netzmittel, Verdicker, Lichtschutzstabilisatoren oder Biozide zugegeben werden.

Für die Verwendung der Polymerisatdispersionen als Heißsiegelklebstoffe bzw. -lacke werden diese auf mindestens eines der durch Heißsiegeln zu verbindenden Substrate in dünner Schicht mit den an sich üblichen Auftragsaggregaten aufgetragen, z.B. durch Streichen oder Rakeln, wobei die Auftragsmenge im allgemeinen bei 1 bis 100, bevorzugt bei 3 bis 40 g/cm² liegt.

Als Substrate bzw. Trägermaterialien für die Beschichtung seien insbesondere genannt (un)bedrucktes Papier, Kartonagen, Metallfolien wie Aluminiumfolien sowie ggf. metallisierte Kunstoffolien und Kunststofformteile aus Polyvinylchlorid, Polyolefinen, Polystyrol oder Polyestern wie Polyethylenterephthalat.

Oft wird der aufgetragene Heißsiegelklebstoff bzw. -lack nach dem Auftrag noch durch Erhitzen verfilmt. Danach wird das beschichtete Substrat mit dem zu verbindenden unbeschichteten Substrat verpreßt (Heißsiegeln), wobei die zusammenpressenden Siegelbacken eine Temperatur von 80 bis 250 und vorzugsweise 100 bis 200°C haben. Die Anpreßdrücke liegen im allgemeinen zwischen 0,1 und 10 bar, insbesondere zwischen 2 und 6 bar bei einer Anpreßzeit (Kontaktzeit) von mindestens 1 Sekunde, im allgemeinen zwischen 2 und 6 Sekunden. Im übrigen wird bzgl. der Verarbeitung von Heißsiegelklebstoffen bzw. -lacken auf Ullmanns Encyclopädie der technischen Chemie, 4.Aufl, Band 14, S.227 ff, Weinheim 1977, verwiesen.

### Beispiel 1 (erfindungsgemässe Polymerisatdispersion)

Eine Mischung von 441,3 g Wasser und 200 g einer handelsüblichen verzuckerten Stärke (Maltodextrin C*PUR 01915 der Fa.Cerestar Deutschland GmbH, Krefeld) wurde auf 85°C erhitzt und mit 2 Gew.% von Zulauf A und 20 Gew.% von Zulauf B versetzt.
Zulauf A:
   - 500 g: Wasser
   - 13,3 g: Natrium-Dodecylbenzolsulfonat
   - 1000 g: n-Butylacrylat
Zulauf B:
   - 250 g: Wasser
   - 6 g: Natriumperoxodisulfat

Es wurde 15 Minuten bei 85°C anpolymerisiert und anschließend mit der Dosierung der Restmengen der Zuläufe A und B begonnen. Die Zugabe erfolgte kontinuierlich während 3 Stunden (Zulauf A) und 3,5 Stunden (Zulauf B). Danach wurde 1 Stunde bei 85°C nachpolymerisiert. Anschließend wurde die Dispersion durch Zugabe von 2,9 g tert. Butylhydroperoxid und 2 g des Natriumsalzes der Hydroxymethansulfinsäure während 60 Minuten chemisch desodoriert. Die resultierende wässrige Polymerisatdispersion hatte einen Feststoffgehalt von 49,7 Gew.% (gemessen nach DIN 53189).

Das Ergebnis der Verwendung als Heißsiegelklebstoff zeigt Beispiel 7.

### Beispiel 2 (erfindungsgemässe Polymerisatdispersion)

Eine Mischung aus 341,3 g Wasser und 100g der in Beispiel 1 verwendeten handelsüblichen verzuckerten Stärke wurde auf 85°C erhitzt und mit 2 Gew.% von Zulauf A und 20 Gew.% von Zulauf B versetzt.
Zulauf A:
   - 500 g: Wasser
   - 13,3 g: Natrium-Dodecylbenzolsulfonat
   - 1000 g: n-Butylacrylat
Zulauf B:
   - 250 g: Wasser
   - 6 g: Natriumperoxodisulfat

Es wurde 15 Minuten bei 85°C anpolymerisiert und anschließend mit der Dosierung der Restmengen der Zuläufe A und B begonnen. Die Zugabe erfolgt kontinuierlich während 3 Stunden (Zulauf A) und 3,5 Stunden (Zulauf B). Danach wurde 1 Stunde bei 85°C nachpolymerisiert. Anschließend wurde die Dispersion durch Zugabe von 2,9 g tert. Butylhydroperoxid und 2 g des Natriumsalzes der Hydroxymethansulfinsäure während 60 Minuten chemisch desodoriert. Die resultierende wässrige Polymerisatdispersion hatte einen Feststoffgehalt von 50,2 Gew.% (gemessen nach DIN 53189).

Das Ergebnis der Verwendung als Heißsiegelklebstoff zeigt Beispiel 7.

### Beispiel 3 (Vergleichsbeispiel 1: ohne Stärkeabbauprodukt)

393,7 g Wasser und 13,3 g Natrium-Dodecylbenzolsulfonat (15%ige wässrige Lösung) wurden auf 85°C erhitzt und mit 2 Gew.% von Zulauf A und 20 Gew.% von Zulauf B versetzt.
Zulauf A:
   - 300 g: Wasser
   - 66,7 g: einer 15 %igen wässrigen Lösung von Natrium-Dodecylbenzolsulfonat
   - 1000 g: n-Butylacrylat
Zulauf B:
   - 250 g: Wasser
   - 6 g: Natriumperoxodisulfat

Es wurde 15 Minuten bei 85°C anpolymerisiert und anschließend mit der Dosierung der Restmengen der Zuläufe A und B begonnen. Die Zugabe erfolgte kontinuierlich während 3 Stunden (Zulauf A) und 3,5 Stunden (Zulauf B). Danach wurde 1 Stunde bei 85°C nachpolymerisiert. Anschließend wurde die Dispersion durch Zugabe von 2,9 g tert. Butylhydroperoxid und 2 g des Natriumsalzes der Hydroxymethansulfinsäure während 60 Minuten chemisch desodoriert. Die resultierende wässrige Polymerisatdispersion hatte einen Feststoffgehalt von 49,1 Gew.% (gemessen nach DIN 53189).

Das Ergebnis der Verwendung als Heißsiegelklebstoff zeigt Beispiel 7.

### Beispiel 4 (Vergleichsversuch: Nachträgliche Abmischung einer Polymerisatdispersion mit 5 Gew.% Stärkeabbauprodukt)

200 g der gemäß Beispiel 3 hergestellten Polymerisatdispersion (ohne Gehalt an Stärkeabbauprodukt) wurden mit 10 Gew.% einer 50 wässrigen Lösung der in Beispiel 1 angegebenen handelsüblichen verzuckerten Stärke versetzt.

### Beispiel 5 (Vergleichsversuch: Nachträgliche Abmischung einer Polymerisatdispersion mit 10 Gew.% Stärkeabbauprodukt)

200 g der gemäß Beispiel 3 hergestellten Polymerisatdispersion (ohne Gehalt an Stärkeabbauprodukt) wurden mit 20 Gew.% einer 50%igen wässrigen Lösung der in Beispiel 1 angegebenen handelsüblichen verzuckerten Stärke versetzt.

### Beispiel 6 (Vergleichsversuch: Nachträgliche Abmischung einer Polymerisatdispersion mit 25 Gew.% Stärkeabbauprodukt)

200 g der gemäß Beispiel 3 hergestellten Polymerisatdispersion (ohne Gehalt an Stärkeabbauprodukt) wurden mit 50 Gew.% einer 50 %igen wässrigen Lösung der in Beispiel 1 angegebenen handelsüblichen verzuckerten Stärke versetzt.

### Beispiel 7 (Anwendungstechnische Prüfung als Blisterkleber)

Die Polymerisatdispersionen der Beispiele 1 bis 3 und die Abmischungen der Beispiele 4 bis 6 wurden in bekannter Art als Blisterkleber geprüft. Hierzu wurden die Prüfprodukte jeweils mit 1 Gew.% einer ca. 65 %igen wässrigen Lösung des Natriumsalzes eines Sulfobernsteinsäureesters (handelsübliches Netzmittel) und jeweils mit 2 Gew.% einer 30 %igen Lösung eines Vinylpyrrolidoncopolymerisats (handelsüblicher Verdicker) vermischt. Geprüft wurde das Blockverhalten der gestapelten Beschichtungen mit verschiedenen Auftragsmengen (g/cm²) bei 40°C nach 15 Stunden Belastung, wobei S/S das Blockverhalten von Schichtseite zu Schichtseite und S/R das Blockverhalten von Schichtseite zu Rückseite angibt. Geprüft wurde ferner das Siegelverhalten gegen Hart-PVC-Folien bei Siegeltemperaturen zwischen 130 und 230°C. Die Prüfergebnisse gibt die Tab.1 wieder, wobei die Benotung wie folgt durchgeführt wurde:

| Blockfestigkeit | | Siegelbarkeit |
|---|---|---|
| 1 | = geräuschloses Auseinanderspr. = | 5 |
| 2 | = knisternde Geräusche = | 4 |
| 3 | = punktförmige Verklebung = | 3 |
| 4 | = flächenartige Verklebung = | 2 |
| 5 | = vollflächige Verklebung = | 1 |

**Tabelle 1**

| Prüfungsergebnisse als Blisterkleber | | | | | | |
|---|---|---|---|---|---|---|
| Kleber | Bsp.1 | Bsp.2 | Bsp.3 (Vgl.) | Bsp.4 (Vgl.) | Bsp.5 (Vgl) | Bsp.6 (Vgl.) |
| | | | | | | |

| Blockverhalten bei 40°C und 15 Stdn. Belastung: | | | | | | |
|---|---|---|---|---|---|---|
| 20 g/cm² | | | | | | |
| S/S | 1 | 1 | 2 | 2 | 2 | 2 |
| S/R | 1 | 1 | 1 | 1 | 1 | 1 |

| 50 g/cm² | | | | | | |
|---|---|---|---|---|---|---|
| S/S | 1 | 1 | 2 | 2 | 2 | 2 |
| S/R | 1 | 1 | 1 | 1 | 1 | 1 |

| 70 g/cm² | | | | | | |
|---|---|---|---|---|---|---|
| S/S | 1 | 1 | 3 | 2 | 2 | 2 |
| S/R | 1 | 1 | 1 | 1 | 1 | 1 |

| 90 g/cm² | | | | | | |
|---|---|---|---|---|---|---|
| S/S | 1 | 1 | 3 | 3 | 3 | 2 |
| S/R | 1 | 1 | 2 | 2 | 2 | 1 |

| 180 g/cm² | | | | | | |
|---|---|---|---|---|---|---|
| S/S | 2 | 1 | 3 | 3 | 3 | 2 |
| S/R | 1 | 1 | 2 | 2 | 2 | 2 |

| 1500/cm² | | | | | | |
|---|---|---|---|---|---|---|
| S/S | 2-3 | 2 | 4 | 4 | 4 | 3 |
| S/R | 2 | 2 | 2 | 2 | 2 | 2 |

| Siegelverhalten gegen H-PVC: Siegeltemp. | | | | | | |
|---|---|---|---|---|---|---|
| 130°C | 3-4 | 5 | 2 | 2 | 2 | 2 |
| 140°C | 3-4 | 5 | 2 | 2 | 2 | 2 |
| 150°C | 3 | 4 | 2 | 2 | 2 | 2 |
| 160°C | 3-4 | 4 | 2 | 2 | 2 | 2 |
| 170°C | 3 | 3-4 | 2 | 2 | 2 | 2 |
| 180°C | 2 | 3 | 2 | 2 | 2 | 2 |
| 190°C | 2 | 3 | 2 | 2 | 2 | 2 |
| 200°C | 2 | 3 | 2 | 2 | 2 | 2 |

| Siegelverhalten gegen H-PVC: | | | | | | |
|---|---|---|---|---|---|---|
| 210°C | 2 | 2-3 | 2 | 2 | 2 | 2 |
| 220°C | 2 | 2 | 2 | 2 | 2 | 2 |
| 230°C | 2 | 2 | 2 | 2 | 2 | 2 |

## Patentansprüche

1. Verfahren zum Heißsiegeln von Substraten durch Beschichten eines Substrats mit einer wässrigen Dispersion eines Polymerisats olefinisch ungesättigter Monomerer, das eine Glasübergangstemperatur von unter +50°C aufweist (Heißsiegelklebstoff oder -lack) und Verpressen des beschichteten Substrats mit einem zweiten zu verbindenden Substrat bei Temperaturen von 80 bis 250°C, dadurch gekennzeichnet, daß als Heißsiegelklebstoff oder -lack eine Polymerisatdispersion verwendet wird, der, zu Beginn oder während der Dispersionspolymerisation der Monomeren, ein wasserlösliches oder in Wasser dispergierbares Stärkeabbauprodukt als Schutzkolloid zugesetzt worden ist.

2. Verfahren nach Anspruch 1, dadurch gekennzeichnet, daß der Polymerisatdispersion als Stärkeabbauprodukt ein wasserlösliches Dextrin zugesetzt worden ist.

3. Verfahren nach Anspruch 1, dadurch gekennzeichnet, daß der Polymerisatdispersion als Stärkeabbauprodukt ein durch unvollständige Hydrolyse mit verdünnter wässriger Säure erhaltenes wasserlösliches Abbauprodukt der Stärke ("verzuckerte Stärke") zugesetzt worden ist.

4. Verfahren nach einem der Ansprüche 1 bis 3, dadruch gekennzeichnet, daß die Menge des zugesetzten Stärkeahbauprodukts 0,1 bis 50 Gew.% der resultierenden Polymerisatmenge der Dispersion beträgt.

5. Verfahren nach einem der Ansprüche 1 bis 4, dadurch gekennzeichnet, daß das Polymerisat olefinisch ungesättigter Monomerer in einer Menge von über 50 Gew.% der Gesamtmonomeren, einen Acrylester und/oder Methacrylsäureester einpolymerisiert enthält.

6. Verfahren nach einem der Ansprüche 1 bis 5, dadurch gekennzeichnet, daß die Dispersion der Monomeren in Gegenwart eines Emulgators durchgeführt worden ist.

7. Verfahren nach einem der Ansprüche 1 bis 6, dadurch gekennzeichnet, daß mit dem Heißsiegelklebstoff oder -lack als Beschichtungsmittel durch Heißsiegeln Papier oder Kartonagen mit einem Kunststoffformteil verbunden werden.

8. Verwendung von wässrigen Dispersionen von Polymerisaten olefinisch ungesättigter Monomerer, die eine Glasübergangstemperatur von unter + 50°C aufweisen, wobei der Dispersion, zu Beginn oder während der Dispersionspolymerisation der Monomeren, ein wasserlösliches oder in Wasser dispergierbares Stärkeabbauprodukt als Schutzkolloid zugesetzt wird, als Heißsiegelklebstoff oder -lack.

9. Verwendung der Polymerisatdispersionen nach Anspruch 8 für das Verbinden von Papier oder Kartonagen mit einem Kunststofformteil zur Herstellung von Blisterpackungen.
